Europäisches Patentamt

European Patent Office

Office européen des brevets

(19)

(11) EP 0 780 032 B1

(12) EUROPÄISCHE PATENTSCHRIFT

(45) Veröffentlichungstag und Bekanntmachung des Hinweises auf die Patenterteilung:
11.11.1998 Patentblatt 1998/46

(21) Anmeldenummer: 95928972.9

(22) Anmeldetag: 24.08.1995

(51) Int Cl.⁶: H02H 7/093

(86) Internationale Anmeldenummer:
PCT/DE95/01123

(87) Internationale Veröffentlichungsnummer:
WO 96/08066 (14.03.1996 Gazette 1996/12)

(54) **SCHALTUNG ZUM BETREIBEN EINES ELEKTROMOTORS**

CIRCUIT FOR OPERATING AN ELECTRIC MOTOR

CIRCUIT PERMETTANT DE FAIRE FONCTIONNER UN MOTEUR ELECTRIQUE

(84) Benannte Vertragsstaaten:
DE ES FR GB IT

(30) Priorität: 09.09.1994 DE 4432058

(43) Veröffentlichungstag der Anmeldung:
25.06.1997 Patentblatt 1997/26

(73) Patentinhaber: ROBERT BOSCH GMBH
70442 Stuttgart (DE)

(72) Erfinder: KESSLER, Martin
D-77815 Bühl (DE)

(56) Entgegenhaltungen:
EP-A- 0 413 893          DE-A- 2 228 715
US-A- 3 716 772          US-A- 4 541 029

• PATENT ABSTRACTS OF JAPAN vol. 009 no. 118 (E-316) ,23.Mai 1985 & JP,A,60 005797 (YASUKAWA DENKI SEISAKUSHO KK) 12.Januar 1985,

## Beschreibung

### Stand der Technik

Die Erfindung geht aus von einer Schaltung zum Betreiben eines Elektromotors nach der Gattung des unabhängigen Anspruchs. Aus der DE-PS 30 34 118 ist eine gattungsgemäße Schaltung bekannt, die einen Sensor enthält, der ein Signal bereitstellt, das ein Maß für die Drehzahl des Elektromotors ist. Die vorbekannte Schaltung enthält eine Überwachungsanordnung zum Feststellen eines erhöhten Lastzustands des Elektromotors, die eine Drehzahlüberwachung vornimmt, wobei die aus dem Sensorsignal ermittelte Istdrehzahl mit einem vorgegebenen absoluten unteren Grenzwert verglichen wird. Der Grenzwert wird aus einem Anfangs-Drehzahlistwert abgeleitet, der nach einer vorgegebenen Zeit nach der Inbetriebnahme der vorbekannten Schaltung festgelegt wird. Die bekannte Schaltung zum Betreiben eines Elektromotors ist eingesetzt in einer elektronischen Überwachung eines Öffnungs- und Schließvorgangs von elektrisch betriebenen Teilen eines Kraftfahrzeugs. Der Grenzwert ist abgestellt auf das Detektieren eines Einklemmens von Gegenständen oder Körperteilen.

Der Erfindung liegt die Aufgabe zugrunde, eine Schaltung zum Betreiben eines Motors anzugeben, die insbesondere einen Schutz einer Endstufe und/oder des Elektromotors gegen eine thermische Überbeanspruchung zuverlässig sicherstellt.

Die Aufgabe wird durch die im unabhängigen Anspruch angegebenen Merkmale gelöst.

### Vorteile der Erfindung

Eine erfindungsgemäß vorgesehene Überwachungsanordnung vergleicht eine Differenz zwischen einem vorgesehenen Drehzahlsollwert und einem aus einem Sensorsignal ermittelten Drehzahlistwert mit einem vorgegebenen Grenzwert. Bei einer Überschreitung des Grenzwerts gibt die Überwachungsanordnung ein Überlastsignal aus.

Die erfindungsgemäße Schaltung beruht darauf, daß im ungestörten Betriebszustand die Differenz zwischen dem vorgegebenen Drehzahlsollwert und dem erfaßten Drehzahlistwert in Abhängigkeit von einem vorgegebenen Drehzahlregler entweder innerhalb bestimmter Grenzen liegt oder vollständig zu Null wird. Eine Schwergängigkeit des Elektromotors oder eines vom Elektromotor angetriebenen Teils sowie ein vollständiges Blockieren führen zur Grenzwertüberschreitung und somit zum Auslösen des Überlastsignals.

Die erfindungsgemäße Schaltung zum Betreiben eines Elektromotors weist den Vorteil auf, daß ein erhöhter Diese Vorrichtung weist weiterhin einen Blockierzähler auf, der bei Ausbleiben von Drehzahlimpulsen einen Blockierzustand anzeigt.

Die Vorrichtung gemäß DE-A-2228715 führt einen Vergleich des Stromes oder der Drehzahl im Hinblick auf einen festen Grenzwert durch. Dies bedeutet, daß ein Drehzahlsprung nur dann ein Überlastsignal nach sich zieht, wenn aufgrund dieses Sprunges der Strom oder die Drehzahl unzulässig hoch werden.

Lastzustand oder ein vollständiges Blockieren mit elektrischen Signalen erkennbar ist, die mit einfachen Mitteln erfaßbar sind. Weitere Sensoren, wie beispielsweise ein Temperatursensor sind nicht erforderlich.

Die erfindungsgemäße Schaltung zum Betreiben eines Elektromotors ist insbesondere geeignet zur Verwendung bei einem Lüfter, wobei der Ventilator gleichzeitig zur Kühlung des Elektromotors und/oder zur Kühlung einer Endstufe eingesetzt ist.

Gegenüber einer Grenzwertfestlegung, die von einem vorgegebenen Drehzahlwert ausgeht, weist die erfindungsgemäße Schaltung zum Betreiben eines Elektromotors den Vorteil auf, daß sowohl der Elektromotor als auch die Endstufe nur für eine geringere thermische Belastung ausgelegt zu sein brauchen.

Vorteilhafte Weiterbildungen und Ausgestaltungen der erfindungsgemäßen Schaltung ergeben sich aus abhängigen Ansprüchen.

Eine besonders vorteilhafte Weiterbildung der erfindungsgemäßen Schaltung sieht vor, daß der in der Überwachungsanordnung vorgesehene Grenzwert für die Drehzahldifferenz in Abhängigkeit vom vorgegebenen Drehzahlsollwert festgelegt ist. Mit dieser Maßnahme wird eine Anpassung des Grenzwerts an unterschiedliche Betriebsverhältnisse möglich.

Eine vorteilhafte Ausgestaltung sieht vor, daß bei einem Auftreten des Überlastsignals der vorgegebene Drehzahlsollwert reduziert wird. Eine andere vorteilhafte Maßnahme sieht vor, daß bei einem Auftreten des Überlastsignals eine Stellgröße einer gesteuerten Spannungsquelle reduziert wird, die in der Ansteuerung der Endstufe enthalten ist. Mit einer dieser Maßnahmen wird gewährleistet, daß trotz eines erhöhten Lastzustands weiterhin ein sicheres Betreiben des Elektromotors möglich ist, ohne die Gefahr einer thermischen Zerstörung befürchten zu müssen.

Eine besonders vorteilhafte Weiterbildung sieht vor, daß das Überlastsignal erst nach Ablauf einer vorgebbaren Zeit von der Überwachungsanordnung ausgegeben wird. Die vorgebbare Zeit ist eine Verzögerungszeit, die das Hochlaufen des Elektromotors, ausgehend beispielsweise vom abgeschalteten Zustand berücksichtigt. Der während des Hochlaufs auftretende instationäre Zustand, der zu einem irrtümlichen Bereitstellen des Überlastsignals führen könnte, ist mit dieser Maßnahme beherrschbar.

Eine andere vorteilhafte Weiterbildung sieht vor, daß das Überlastsignal nach einer vorgegebenen Zeit unterdrückt wird. Ist der Elektromotor weiterhin überlastet, so wird das Überlastsignal wieder ausgegeben. In diesem Betrieb wird ein periodisches Einschalten des Elektromotors versucht. Die Zeiten, in denen das Überlastsignal auftritt oder unterdrückt ist, sind vorteihafterweise derart bemessen, daß trotz einer Überlastung oder eines vollständigen Blockierens des Elektromotors die mittlere Leistung auf einen Wert begrenzt ist, die für den Elektromotor und/oder für die Endstufe keine Gefahr einer thermischen Überlastung darstellt.

Weitere vorteilhafte Ausgestaltungen und vorteilhafte Weiterbildungen ergeben sich aus weiteren abhängigen Ansprüchen in Verbindung mit der folgenden Beschreibung.

Zeichnung

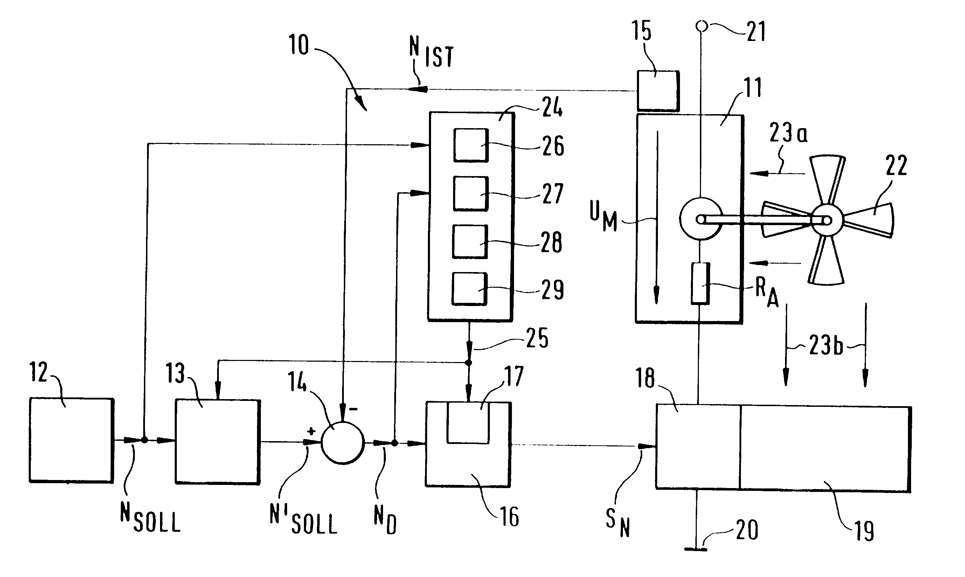

In der Figur ist ein Blockschaltbild einer erfindungsgemäßen Schaltung zum Betreiben eines Elektromotors gezeigt.

Die Figur zeigt einen Drehzahlregelkreis 10, der die Drehzahl eines Elektromotors 11 auf einen vorgegebenen Drehzahlsollwert $N_{SOLL}$ regelt. Der Drehzahlsollwert $N_{SOLL}$ wird von einem Sollwertgeber 12 bereitgestellt. Der Sollwertgeber 12 gibt den Drehzahlsollwert $N_{SOLL}$ an einen Sollwertreduzierer 13 ab, der den Drehzahlsollwert $N_{SOLL}$ an einen Summierer 14 als begrenzten Drehzahlsollwert $N'_{SOLL}$ weiterleitet. Der Summierer 14 bildet eine Drehzahldifferenz $N_D$ zwischen dem begrenzten Drehzahlsollwert $N'_{SOLL}$ und einem Drehzahlistwertsignal $N_{IST}$. Das Drehzahlistwertsignal $N_{IST}$ ist ein Maß für die Drehzahl des Elektromotors 11, das ein Drehzahlsensor 15 bereitstellt.

Der Summierer 14 gibt die Drehzahldifferenz $N_D$ an einen Regler 16 ab, der eine Stellgröße $S_N$ ermittelt. Der Regler 16 enthält einen Stellgrößenbegrenzer 17. Die Stellgröße $S_N$ gelangt in eine Endstufe 18, die mit einem Kühlkörper 19 verbunden ist. Die Endstufe 18 legt den Elektromotor 11 über einen ersten Anschluß 20 und einen zweiten Anschluß 21 an eine nicht näher gezeigte Energiequelle. Die Endstufe 18 wird mit der Stellgröße $S_N$ derart gesteuert, daß die Drehzahl des Elektromotors 11 dem vorgegebenen Drehzahlsollwert $N_{SOLL}$ entspricht.

Ein durch den Elektromotor 11 fließender Strom führt zu einer Motorspannung $U_M$, die dem Spannungsabfall an einem Ankerwiderstand $R_A$ entspricht, zu dem eine elektromotorische Gegenspannung (EMK) addiert wird.

Der Elektromotor 11 betätigt einen Ventilator 22, der einen ersten Luftstrom 23a in Richtung des Elektromotors 11 und einen zweiten Luftstrom 23b in Richtung des Kühlkörpers 19 abgibt.

Die Drehzahldifferenz $N_D$ sowie der Drehzahlsollwert $N_{SOLL}$ werden einer Überwachungsanordnung 24 zugeleitet, die ein Überlastsignal 25 bereitstellt, das sowohl an den Sollwertreduzierer 13 als auch an den Stellgrößenbegrenzer 17 abgegeben wird. Die Überwachungsanordnung 24 enthält einen ersten, einen zweiten und einen dritten Zeitgeber 26, 27, 28 sowie einen Grenzwertgeber 29.

Die in der Figur gezeigte erfindungsgemäße Schaltung zum Betreiben des Elektromotors 11 arbeitet folgendermaßen:

Der Drehzahlregelkreis 10 regelt die Drehzahl des Elektromotors 11 derart, daß die Drehzahldifferenz $N_D$ zwischen dem vom Sollwertgeber 12 bereitgestellten Drehzahlsollwert $N_{SOLL}$ und dem vom Drehzahlsensor 15 bereitgestellten Drehzahlistwertsignal $N_{IST}$ möglichst gering oder vollständig zu Null wird. Zur Durchführung der Regelaufgabe enthält der Drehzahlregelkreis 10 den Summierer 14, der die Drehzahldifferenz $N_D$ als Regelabweichung aus dem Drehzahlistwertsignal $N_{IST}$ und dem begrenzten Drehzahlsollwert $N'_{SOLL}$ ermittelt. Der Regler 16 legt in Abhängigkeit von der Drehzahldifferenz $N_D$ die Stellgröße $S_N$ fest. Der Regler 16 kann als ein aus der umfangreichen regelungstechnischen Grundlagenliteratur bekannter Regler, beispielsweise als Proportional- oder als Proportional-Integralregler ausgestaltet sein. Geeignet sind sowohl analoge als auch digitale Regler. Die Stellgröße $S_N$ kann ein analoges Signal sein, daß der Endstufe 18 zugeleitet wird. Vorzugsweise ist die Stellgröße $S_N$ ein digitales impulsbreitenmoduliertes Signal, das in der Endstufe 18 einen getakteten Betrieb realisiert. Bei dem getakteten Betrieb wird in rascher zeitlicher Folge der Elektromotor 11 mit der nicht näher gezeigten Energiequelle verbunden oder vollständig abgeschaltet. Das Ergebnis ist eine mittlere Motorspannung $U_M$, die in Abhängigkeit von der durch den Ventilator 22 festgelegten Last zu einem bestimmten Motorstrom führt. Die Endstufe 18 kann als gesteuerte Spannungsquelle bezeichnet werden, welche die Motorspannung $U_M$ variabel auf einen Wert festlegt, bei dem die Drehzahldifferenz $N_D$ möglichst gering oder vollständig zu Null wird. Der getaktete Betrieb der Endstufe 18 mit der Impulsbreitensteuerung ermöglicht die Auslegung der Endstufe 18 für einen Schaltbetrieb, der eine minimale Verlustleistung in der Endstufe 18 ergibt, die über den Kühlkörper 19 abgeführt werden muß. Der Kühlkörper 19 ist entweder ein separater, mit der Endstufe 18 verbundener Kühlkörper oder ein speziell herausgearbeitetes Bestandteil der Endstufe 18.

Die Drehzahl des Elektromotors 11 wird von dem Drehzahlsensor 15 erfaßt. Es ist festzuhalten, daß anstelle der Motordrehzahl ebenso die Drehzahl des Ventilators 22 oder die Drehzahl eines nicht näher gezeigten Antriebs erfaßt werden kann. Wesentlich ist lediglich, daß der Drehzahlsensor 15 das Drehzahlistwertsignal $N_{IST}$ als ein Maß für die Drehzahl des Elektromotors 11 bereitstellt.

Der Drehzahlsensor 15 arbeitet beispielsweise auf optoelektronischer Basis. Geeignet ist eine Lichtschranke. Der Drehzahlsensor 15 arbeitet vorzugsweise auf magnetischer Basis, wobei der Drehzahlsensor 15 ein Magnetfeld erfaßt. Geeignet sind beispielsweise Hallsensoren, magnetoresistive Elemente oder induktive Geber. Insbesondere geeignet ist gleichfalls eine Erfassung von Kommutierungssignalanteilen im Motorstrom. Vorzugsweise wird die Drehzahl indirekt erfaßt durch Auswertung der Betriebsdaten des Elektromotors 11. Die Drehzahl ist proportional zur induzierten Gegenspannung, die ihrerseits aus der Motorklemmenspannung und dem Motorstrom bei bekanntem Innenwiderstand bestimmbar ist.

Vorgesehen ist die Überwachungsanordnung 24, die die Drehzahldifferenz $N_D$ mit dem vom Grenzwertgeber 29 bereitgestellten Grenzwert vergleicht. Überschreitet die Drehzahldifferenz $N_D$ den Grenzwert, dann gibt die Überwachungsanordnung 24 das Überlastsignal 25 aus. Das Überlastsignal 25 kann beispielsweise ein Warnsignal auslösen. Im gezeigten Ausführungsbeispiel kann das Überlastsignal 25 beispielsweise den vom Sollwertgeber 12 vorgegebenen Drehzahlsollwert $N_{SOLL}$ im Sollwertreduzierer 13 um einen vorgegebenen Betrag absenken oder vollständig zu Null machen. Der abgesenkte Drehzahlsollwert $N_{SOLL}$ ist als begrenzter Drehzahlsollwert $N'_{SOLL}$ bezeichnet, der dem Summierer 14 zugeleitet wird. Gleichfalls ist es möglich, daß das Überlastsignal 25 beispielsweise die Stellgröße $S_N$ des Reglers 16 mit dem im Regler 16 enthaltenen Stellgrößenbegrenzer 17 um einen vorgegebenen Betrag reduziert oder vollständig auf Null absenkt.

Eine besonders vorteilhafte Ausgestaltung sieht vor, daß der vom Grenzwertgeber 29 bereitgestellte Grenzwert in Abhängigkeit vom vorgegebenen Drehzahlsollwert $N_{SOLL}$ festgelegt ist. Der Überwachungsanordnung 24 ist deshalb neben der Drehzahldifferenz $N_D$ auch der Drehzahlsollwert $N_{SOLL}$ als Eingangssignal zugeführt. Bei einem hohen Drehzahlsollwert $N_{SOLL}$ wird der Grenzwert vorzugsweise niedriger festgelegt als bei einem kleineren Drehzahlsollwert $N_{SOLL}$.

Eine andere vorteilhafte Ausgestaltung sieht den ersten Zeitgeber 26 in der Überwachungsanordnung 24 vor. Der erste Zeitgeber 26 ist auf eine Zeit festgelegt, die beim Hochlaufen des Elektromotors 11, beispielsweise vom Stillstand bis zum vorgegebenen Nennbetrieb, bei dem der Drehzahlsollwert $N_{SOLL}$ erreicht wird, entspricht. Während der vom ersten Zeitgeber 26 vorgegebenen Zeit wird die Ausgabe des Überlastsignals 25 unterdrückt. Das Einschalten des Elektromotors 11 erkennt der erste Zeitgeber 26 beispielsweise durch eine Änderung in der Vorgabe des Drehzahlsollwerts $N_{SOLL}$.

Der zweite und dritte Zeitgeber 27, 28 ermöglichen einen periodisch wiederkehrenden Inbetriebnahmeversuch des Elektromotors 11 trotz eines festgestellten Überlast- oder erhöhten Lastzustandes. Der zweite Zeitgeber 27 startet beispielsweise gleichzeitig mit dem Auftreten des Überlastsignals 25. Die vom zweiten Zeitgeber 27 festgelegte Zeit legt somit die Abschaltzeit des Elektromotors 11 oder die Zeit der reduzierten Leistung fest. Nach Ablauf der vom zweiten Zeitgeber 27 vorgegebenen Zeit wird in der vom dritten Zeitgeber 28 vorgegebenen Zeit das Überlastsignal 25 unterdrückt. In der vom dritten Zeitgeber 28 vorgegebenen Zeit wird daher versucht, den Nennbetrieb des Elektromotors 11 mit dem vorgegebenen Drehzahlsollwert $N_{SOLL}$ wieder aufzunehmen. Ein vorübergehender Blockierzustand oder eine vorübergehende Schwergängigkeit werden mit dieser Maßnahme erkannt und haben keine weiteren Auswirkungen auf den weiteren Betrieb. Durch die Festlegung der vom dritten Zeitgeber 28 vorgegebenen Einschaltzeit und der vom zweiten Zeitgeber 27 vorgegebenen Abschaltzeit oder der Zeit mit reduzierter Leistung kann erreicht werden, daß eine thermische Überlastung sowohl des Elektromotors 11 als auch der vom Kühlkörper 19 gekühlten Endstufe 18 auch im dauerhaft gestörten Betrieb bei Überlast innerhalb vorgegebener Grenzen bleibt. Eine geeignete Festlegung kann beispielsweise derart gewählt werden, daß der mittlere, durch den Elektromotor 11 fließende Strom $I_M$ derart gewählt ist, daß gilt:

$$I_M = T_{ein}/(T_{ein} + T_{aus}) \times (U_{Mmax}/R_A)$$

wobei $T_{ein}$ die Einschaltzeit, $T_{aus}$ die Ausschaltzeit sowie $U_{Mmax}$ die maximale Motorspannung ist. Bei diesem derart festgelegten mittleren Motorstrom darf keine thermische Überlastung auftreten.

Eine bevorzugte Verwendung der erfindungsgemäßen Schaltung zum Betreiben des Elektromotors 11 ist bei einem Lüfter gegeben, der vorzugsweise in einem Kraftfahrzeug angeordnet ist und dort zur Innenraumbelüftung dient. Eine Weiterbildung der erfindungsgemäßen Verwendung bei einem Lüfter sieht vor, daß die Endstufe 18 und/oder der Elektromotor 11 vom Luftstrom 24a, 24b des Ventilators 22 selbst gekühlt werden. Mit dieser Maßnahme ist es möglich, eine preisgünstige Endstufe 18 vorzusehen, deren zulässige Dauerverlustleistung einen geringeren Wert aufweisen kann als eine Endstufe 18, die ohne zusätzliche Kühlung auskommen muß. Bei dieser Weiterbildung ist es daher wesentlich, daß bei einer Schwergängigkeit des Elektromotors 11 oder bei einem vollständigen Blockieren der Motorstrom in der Endstufe 18 und somit deren Verlustleistung nach dem Wegfall der zusätzlichen Kühlung durch den Ventilator 22 reduziert wird.

Als Endstufe 18 ist beispielsweise ein Transistor, vorzugsweise ein Feldeffekttransistor geeignet. Bei einem Bipolartransistor ist die Stellgröße $S_N$ im analogen Betrieb ein Steuerstrom, der in die Basis fließt. Bei einem Feldeffekttransistor ist die Stellgröße $S_N$ eine Steuerspannung, die das Gate beaufschlagt. Innerhalb eines getakteten Betriebs ist in allen Fällen eine impulsbreitenmodulierte, digitale Stellgröße $S_N$ vorgesehen, welche die Endstufe 18 als gesteuerte Spannungsquelle betreibt, die die mittlere Motorspannung $U_M$ vorgibt.

Prinzipiell ist es möglich, die erfindungsgemäße Schaltung auch ohne Drehzahlregelkreis 10 zu betreiben. Anstelle der Drehzahlregelung ist dann eine Drehzahlsteuerung vorgesehen, wobei die Überwachungsanordnung 24 nach wie vor die Drehzahldifferenz $N_D$ erfaßt, die im gesteuerten Betrieb auftritt.

**Patentansprüche**

1. Schaltung zum Betreiben eines Elektromotors, mit einer Anordnung, die ein Signal bereitstellt, das ein Maß für die Drehzahl des Elektromotors ist, und mit einer Überwachungsanordnung zum Feststellen eines erhöhten Lastzustands des Elektromotors, dadurch gekennzeichnet, daß die Überwachungsanordnung (24) eine Drehzahldifferenz ($N_D$) zwischen einem vorgegebenen Drehzahlsollwert ($N_{SOLL}$) und der aus dem Drehzahlistwertsignal ($N_{IST}$) ermittelten Istdrehzahl mit einem vorgegebenen Grenzwert vergleicht und bei einer Überschreitung des Grenzwerts ein Überlastsignal (25) ausgibt.

2. Schaltung nach Anspruch 1, dadurch gekennzeichnet, daß der Grenzwert abhängt vom vorgegebenen Drehzahlsollwert ($N_{SOLL}$).

3. Schaltung nach Anspruch 1, dadurch gekennzeichnet, daß das Überlastsignal (25) einem Sollwertreduzierer (13) zugeführt ist, der den Drehzahlsollwert ($N_{SOLL}$) auf einen begrenzten Drehzahlsollwert ($N'_{SOLL}$) absenkt.

4. Schaltung nach Anspruch 1, dadurch gekennzeichnet, daß das Überlastsignal (25) einem Stellgrößenbegrenzer (17) zugeleitet ist, der die einer Endstufe (18) zugeführte Stellgröße ($S_N$) auf einen vorgegebenen Wert reduziert.

5. Schaltung nach Anspruch 1, dadurch gekennzeichnet, daß in der Überwachungsanordnung (24) ein erster Zeitgeber (26) vorgesehen ist, der einen Hochlaufvorgang des Elektromotors (11) nach einer Änderung des Drehzahlsollwerts ($N_{SOLL}$) berücksichtigt durch Unterdrücken des Überlastsignals (25).

6. Schaltung nach Anspruch 1, dadurch gekennzeichnet, daß in der Überwachungsanordnung (24) ein zweiter Zeitgeber (27) vorgesehen ist, der das Überlastsignal (25) für die vom zweiten Zeitgeber (27) vorgegebene Zeit ($T_{aus}$) ausgibt, und daß ein dritter Zeitgeber (28) vorgesehen ist, der eine Zeit ($T_{ein}$) vorgibt, während der das Überlastsignal (25) unterdrückt ist.

7. Schaltung nach Anspruch 6, dadurch gekennzeichnet, daß die von den beiden Zeitgebern (27, 28) vorgegebenen Zeiten ($T_{aus}$, $T_{ein}$) derart bemessen sind, daß eine thermische Überlastung des Elektromotors (11) und/oder der Endstufe (18) ausgeschlossen ist.

8. Schaltung nach Anspruch 1, dadurch gekennzeichnet, daß die Anordnung zum Bereitstellen eines Drehzahlsignals einen Drehzahlsensor enthält.

9. Schaltung nach Anspruch 1, dadurch gekennzeichnet, daß die Drehzahl aus dem erfaßten Motorstrom und der Motorklemmenspannung ermittelt ist.

10. Verwendung der Schaltung nach Anspruch 1 bei einem Lüfter, wobei ein Ventilator (22) des Lüfters den Elektromotor (11) und/oder die Endstufe (18) über Luftströme (24a, 24b) kühlt.

**Claims**

1. Circuit for operating an electric motor, having an arrangement which provides a signal which is a measure of the speed of an electric motor, and having a monitoring arrangement for determining a heightened state of charge of the electric motor, characterized in that the monitoring arrangement (24) compares a speed differential ($N_D$) between a prescribed desired speed value ($N_{SOLL}$) and the actual speed determined from the signal for the actual speed value ($N_{IST}$) with a prescribed limiting value, and emits an overload signal (25) in the case of overshooting of the limiting value.

2. Circuit according to Claim 1, characterized in that the limiting value is a function of the prescribed desired speed value ($N_{SOLL}$).

3. Circuit according to Claim 1, characterized in that the overload signal (25) is fed to a desired value reducer (13) which lowers the desired speed value ($N_{SOLL}$) to a limited desired speed value ($N'_{SOLL}$).

4. Circuit according to Claim 1, characterized in that the overload signal (25) is fed to a manipulated variable limiter (17) which reduces the manipulated variable ($S_N$) fed to an output stage (18) to a prescribed value.

5. Circuit according to Claim 1, characterized in that provided in the monitoring arrangement (24) is a first timer (26) which takes account of an acceleration process of the electric motor (11) after a change in the desired speed value ($N_{SOLL}$) by suppressing the overload signal (25).

6. Circuit according to Claim 1, characterized in that provided in the monitoring arrangement (24) is a second timer (27), which emits the overload signal (25) for the time ($T_{aus}$) prescribed by the second timer (27), and in that a third timer (28) is provided which prescribes a time ($T_{ein}$) during which the overload signal (25) is suppressed.

7. Circuit according to Claim 6, characterized in that the times ($T_{aus}$, $T_{ein}$) prescribed by the two timers (27, 28) are dimensioned in such a way that thermal overloading of the electric motor (11) and/or of the output stage (18) is excluded.

8. Circuit according to Claim 1, characterized in that the arrangement for providing a speed signal contains a speed sensor.

9. Circuit according to Claim 1, characterized in that the speed is determined from the detected motor current and the motor terminal voltage.

10. Use of the circuit according to Claim 1 in the case of a fan, a ventilator (22) of the fan cooling the electric motor (11) and/or the output stage (18) via air currents (24a, 24b).

**Revendications**

1. Circuit servant à faire fonctionner un moteur électrique, avec un dispositif qui fournit un signal qui constitue une mesure pour la vitesse de rotation du moteur électrique, et avec un dispositif de surveillance qui sert à déterminer un état de charge accru du moteur électrique,
caractérisé en ce que
le dispositif de surveillance (24) compare une différence de vitesse de rotation ($N_D$) entre une valeur de consigne ($N_{CONS}$) prédéfinie de vitesse de rotation et la vitesse de rotation réelle déterminée à partir du signal de la valeur réelle de la vitesse de rotation ($N_{REEL}$) à une valeur limite prédéfinie et délivre un signal de surcharge (25) lors d'un dépassement de la valeur limite.

2. Circuit selon la revendication 1,
caractérisé en ce que
la valeur limite dépend de la valeur de consigne prédéfinie ($N_{CONS}$) de la vitesse de rotation.

3. Circuit selon la revendication 1,
caractérisé en ce que
le signal de surcharge (25) est amené à un réducteur (13) de valeur de consigne qui abaisse la valeur de consigne ($N_{CONS}$) de la vitesse de rotation à une valeur de consigne ($N'_{CONS}$) limitée de la vitesse de rotation.

4. Circuit selon la revendication 1,
caractérisé en ce que
le signal de surcharge (25) est amené à un limiteur de grandeur de réglage (17) qui réduit la grandeur de réglage ($S_N$), amenée à un étage final (18) à une valeur prédéfinie.

5. Circuit selon la revendication 1,
caractérisé en ce que
l'on prévoit dans le dispositif de surveillance (24) une première minuterie (26) qui prend en considération un processus de marche à plein régime du moteur électrique (11) après une variation de la valeur de consigne ($N_{CONS}$) de la vitesse de rotation en supprimant le signal de surcharge (25).

6. Circuit selon la revendication 1,
caractérisé en ce que

• l'on prévoit dans le dispositif de surveillance (24) une deuxième minuterie (27) qui délivre le signal de surcharge (25) pour le temps ($T_{aus}$) prédéfini par la deuxième minuterie (27), et
• en ce que l'on prévoit une troisième minuterie (28) qui prédéfinit un temps ($T_{ein}$), pendant lequel le signal de surcharge (25) est supprimé.

7. Circuit selon la revendication 6,
caractérisé en ce que
les temps ($T_{aus}$, $T_{ein}$) qui sont prédéfinis par les deux minuteries (27, 28) sont mesurés d'une manière telle qu'il soit exclu d'avoir une surcharge thermique du moteur électrique (11) et/ou de l'étage final (18).

8. Circuit selon la revendication 1,
caractérisé en ce que
le dispositif servant à fournir un signal de vitesse de rotation contient un détecteur de vitesse de rotation.

9. Circuit selon la revendication 1,
caractérisé en ce que
la vitesse de rotation est déterminée à partir de l'intensité du moteur détectée et de la tension aux bornes du moteur

10. Utilisation du circuit selon la revendication 1, dans le cas d'une soufflante, le ventilateur (22) de la soufflante refroidissant le moteur électrique (11) et/ou l'étage final (18) au moyen de courants d'air (24a, 24b).